# EUROPEAN PATENT APPLICATION

(11) **EP 2 336 601 A1**
(43) Date of publication of application: **22.06.2011**
(21) Application number: 10475501.2
(22) Date of filing: 19.01.2010
(51) Int. Cl.: F16H 37/06, F16H 48/10

(54) **Transmission with one input and two output opposed shafts**

(30) Priority: 16.12.2009 SK 500592009
(71) Applicant: Transmisie engineering a.s., 03601 Martin (SK)
(72) Inventor: Peroncík, Miroslav, 03601, Martin (SK); Peroncík, Milos, 03601, Martin (SK); Sirán, Stanislav, 03601, Martin (SK); Jurkovic, Viliam, 03601, Martin (SK); Baricák, Milan, 03843, Klástor pod Znievom (SK); Hrcek, Stanislav, 01008, Zilina (SK)
(74) Representative: Belicka, Ivan

(57) **Abstract**

Transmission with one input and two output opposed shafts intended in particular for driving the two-shaft technological equipment; the transmission is composed of the input shaft **(1)** firmly coupled with the central gear **(2),** which is in gearing with the satellites (planet gears) **(3);** said satellites **(3)** are rotationally mounted on the satellite **(3)** carrier **(5)** and at the same time they are in gearing with the central gear **(4);** said satellite **(3)** carrier **(5)** is firmly coupled with the cogged pinion **(6),** which is in gearing with the first cogwheel (gear) **(7);** said first cogwheel **(7)** is firmly coupled with the first output shaft **(8),** which is firmly coupled with the second cogwheel **(9);** said second cogwheel **(9)** is in gearing with the third cogwheel **(10),** which is firmly coupled with the second output shaft **(11);** the central gear **(4)** is firmly coupled with the cogged pinion **(12),** which is in gearing with the fourth cogwheel **(13)** firmly coupled with the second output shaft **(11).**

## Description

### Field of the Technology

The technical solution relates to differential planetary/epicyclic spur mechanical reduction transmission (gear box) with one input and two output opposed shafts intended in particular for driving the two-shaft technological equipment.

### Background of the Technology

At present, a wide variety of gearings is used in practice. Disregarding other types of gearings, such as gearings with endless members (chains or belts), the cogwheel gearings are frequently used in the art. By combining a variety of cogwheels, we are able to construct specific gearings or transmissions intended for specialized use in specific equipment. Known elements and parts are used almost each time in gearings and transmissions/differentials; however, through combination thereof, we can achieve a new arrangement of said elements or parts. Various types of cogwheels can be used, e.g. spur cogwheels or bevel cogwheels. Planetary transmissions are used in more sophisticated transmissions; a planetary transmission is usually composed of a central (sun) gear, satellites, crown gear and a carrier. The advantage of the planetary transmission lies in its high gear ratio and in the fact that the planetary transmissions are less spatially demanding.

Document JP 10044145 describes an enclosed kneader with a pair of kneading blades. The kneader is driven by a motor via transmission, which has one input driven shaft and two output driven shafts. The gearing of the transmission is in a form of the spur gearing.

Document CN 201042659 describes a kneader with a transmission, which has one input driven shaft and two output driven shafts.

### The Subiect-Matter of the Technical Solution

The subject of this utility model application is the differential planetary/epicyclic spur mechanical reduction transmission with one input and two output opposed shafts intended in particular for driving the two-shaft technological equipment; said transmission is composed of the input shaft firmly coupled with the central gear, which is in a cogged gearing with the satellites (planet gears); said satellites are rotationally mounted on the satellite carrier and at the same time they are in a cogged gearing with the central gear; said satellite carrier is firmly coupled with the cogged pinion, which is in gearing with the first cogwheel (gear); said first cogwheel is firmly coupled with the first output shaft, which is firmly coupled with the second cogwheel; said second cogwheel is in gearing with the third cogwheel, which is firmly coupled with the second output shaft; the central gear is firmly coupled with the cogged pinion, which is in gearing with the fourth cogwheel firmly coupled with the second output shaft.

The main advantages of the technical solution include higher mechanical efficiency, lower weight, lower need for the oil fill and related lower environmental burden. The increase in the mechanical efficiency is caused by a suitable combination of the planetary differential with the spur cogged gearings. Smaller incorporation dimensions (in comparison with the traditional concepts) by the same transmitted output represent yet another advantage of the present solution. Since the transmission is intended for driving equipment, the installed outputs of which could be as high as several megawatts, the advantages of using and operating the new concept of the transmission are noteworthy.

### Summary of Figures

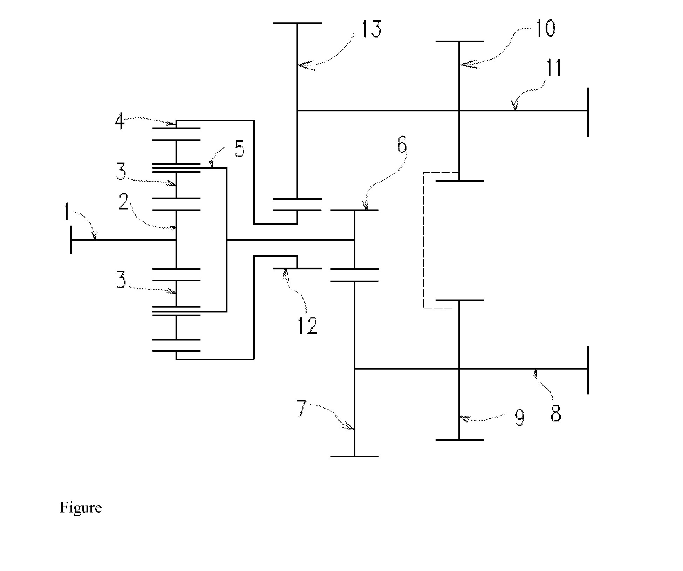

The kinematic schema of the gearing is provided in the enclosed figure.

### Examples of the Technical Solution Embodiments

The subject of the technical solution is the differential planetary/epicyclic spur mechanical reduction transmission with one input and two output opposed shafts intended in particular for driving the two-shaft technological equipment; said transmission is composed of the input shaft **(1)** firmly coupled with the central gear **(2),** which is in a cogged gearing with the satellites (planet gears) **(3);** said satellites **(3)** are rotationally mounted on the satellite **(3)** carrier **(5)** and at the same time they are in a cogged gearing with the central gear **(4);** said satellite **(3)** carrier **(5)** is firmly coupled with the cogged pinion **(6),** which is in gearing with the first cogwheel (gear) **(7);** said first cogwheel **(7)** is firmly coupled with the first output shaft **(8),** which is firmly coupled with the second cogwheel **(2);** said second cogwheel **(2)** is in gearing with the third cogwheel **(10),** which is firmly coupled with the second output shaft **(11),** the central gear **(4)** is firmly coupled with the cogged pinion **(12),** which is in gearing with the fourth cogwheel **(13)** firmly coupled with the second output shaft **(11).**

Output entering the transmission on the input shaft **(1),** which is firmly coupled with the central gear **(2)** of the planetary differential, is via cogged gearing **2→3, 3→4** and the mechanical bound **3↔5** of the planetary differential distributed in two branches - the carrier **(5)** branch and the crown gear **(4)** branch. The carrier **(5)** branch proceeds further through the cogged gearing **6→7** to the first output shaft **(8).** The crown gear **(4)** branch proceeds further through the cogged gearing **12→13** to the second output shaft **(11).** The output shafts **(8** and **11)** are mutually coupled via cogged gearing **9→10** of the coupling gearing.

### Industrial application

It is appropriate to use the technical solution for the industrial applications of the opposed two-shaft machines and equipment drives, in which the axial distance between shafts is relatively small and the installed output is relatively high (e.g. rubber mixture mixers, calenders, compactors, etc.)

### List of the Reference Symbols

**1** - Input shaft
**2** - Central (sun) gear
**3** - Satellites
**4** - Crown gear
**5** - Satellite carrier
**6** - Cogged pinion
**7** - The first cogwheel (gear)
**8** - The first output shaft
**9** - The second cogwheel of the coupling cogged gearing
**10** - The third cogwheel of the coupling cogged gearing
**11** - The second output shaft
**12** - Cogged pinion
**13** - The fourth cogwheel

## Claims

1. Transmission with one input and two output opposed shafts intended in particular for driving the two-shaft technological equipment **characterized in that** it is composed of the input shaft **(1)** firmly coupled with the central gear **(2),** which is in gearing with the satellites (planet gears) **(3);** said satellites **(3)** are rotationally mounted on the satellite **(3)** carrier **(5)** and at the same time they are in gearing with the central gear **(4);** said satellite **(3)** carrier **(5)** is firmly coupled with the cogged pinion **(6),** which is in gearing with the first cogwheel (gear) **(7);** said first cogwheel **(7)** is firmly coupled with the first output shaft **(8),** which is firmly coupled with the second cogwheel **(9);** said second cogwheel **(9)** is in gearing with the third cogwheel **(10),** which is firmly coupled with the second output shaft **(11);** the central gear **(4)** is firmly coupled with the cogged pinion **(12),** which is in gearing with the fourth cogwheel **(13)** firmly coupled with the second output shaft **(11).**
